# EUROPEAN PATENT APPLICATION

(11) **EP 2 949 480 A1**
(43) Date of publication of application: **02.12.2015**
(21) Application number: 14169763.1
(22) Date of filing: 26.05.2014
(51) Int. Cl.: B60C 1/00, C09D 5/00

(54) **Method for prolonging lifespan of a tire**

(71) Applicant: Hirt, Hans Martin, 68-213 Grotow (PL)
(72) Inventor: Hirt, Hans Martin, 68-213 Grotow (PL)
(74) Representative: Blonski, Pawel

(57) **Abstract**

An additive for application on tire surface for prolonging lifespan of the tire, the additive comprising: Rhodopseudomonas in a volume of 40% of total additive volume; Lactobacillus in a volume of 9% of total additive volume; Saccharomyces extract in a volume of 1% of total additive volume; Streptomyces in a volume of 3%of total additive volume; Aspergillus in a volume of 3% of total additive volume; Mineral micro ceramic in a volume of 24% of total additive volume; Mastic extract in a volume of 2% of total additive volume; Dianthus extract in a volume of 2% of total additive volume; Eucalyptus extract in a volume of 3% of total additive volume; Salvia extract in a volume of 2% of total additive volume; Lavandula extract in a volume of 7% of total additive volume; Thyme extract in a volume of 4% of total additive volume.

## Description

The present invention relates to a method for prolonging lifespan of a tire. In particular the present invention relates to an additive for an already produced tire such as a car or truck tire.

Tire are subject to great forces when in use and their properties are gradually destroyed by rolling friction, mechanical interactions as well as oxidation and aging due to exposure to light.

Prior art defines different mixtures of materials constituting a tire and different shapes of tire threads, which both affect tire lifespan in terms of distance for which a tire may be safely used.

It would be advantageous to increase tire lifespan in terms of distance for which a tire may be safely used.

The aim of the development of the present invention is an improved and cost effective method for prolonging lifespan of a tire.

An object of the present invention is an additive for application on a tire surface for prolonging lifespan of the tire, the additive comprising: Rhodopseudomonas in a volume of 40% of total additive volume; Lactobacillus in a volume of 9% of total additive volume; Saccharomyces extract in a volume of 1% of total additive volume; Streptomyces in a volume of 3%of total additive volume; Aspergillus in a volume of 3% of total additive volume; Mineral micro ceramic in a volume of 24% of total additive volume; Mastic extract in a volume of 2% of total additive volume; Dianthus extract in a volume of 2% of total additive volume; Eucalyptus extract in a volume of 3% of total additive volume; Salvia extract in a volume of 2% of total additive volume; Lavandula extract in a volume of 7% of total additive volume; Thyme extract in a volume of 4% of total additive volume.

Another object of the present invention is a method for prolonging lifespan of a tire, the method comprising a step of applying the additive according to the present invention on the inner side of a tire.

Preferably, the application of the additive on the inner side of a tire is effected prior to inflation of the tire.

Preferably, the application of the additive on the inner side of a tire is effected after inflation of the tire.

Preferably, 20ml of the additive are applied to a car or bicycle or motorcycle tire.

Preferably, 50ml of the additive are applied to a truck or bus tire.

Another object of the present invention is a tire comprising the additive according to the present invention applied on the inner side.

These and other objects of the invention presented herein are accomplished by providing a method for prolonging lifespan of a tire. Further details and features of the present invention, its nature and various advantages will become more apparent from the following detailed description of the preferred embodiments shown in a drawing, in which:
- Fig. 1: presents a diagram of the method according to the present invention; and
- Fig. 2: presents a tire according to the present invention.

Everywhere where an object is exposed to air i.e. in particular oxygen, a process of oxidation is present, which cause aging and wear of materials. The present invention aims at reducing oxidation of tire materials by providing an additive, application of which slows aging of material and thereby increases tire lifespan in terms of distance for which a tire may be safely used.

The aforementioned additive is a liquid mixture based on stabilized, fermented secondary vegetable substances, enzymes, microorganisms, mineral micro ceramics enhanced with biosignals and water.

The additive according to the present invention is neutral and may be added to any closed chamber and is stable.

The additive is a complexing agent that joins metal ions that favor disintegration of chemical compounds, deionizes and provided an electron surplus.

The additive also encloses long-chain molecules, keeps them in suspension and prevents their deposition on inner surfaces.

Release of the agent is slow and depends on provided amounts of air or other gas such as nitrogen (in case of nitrogen filled tires). One of properties of the agent is a repair capacity of existing polymer chains (comprising for example a polymer and carbon.

Owing to the application of the agent existing cluster structures in the tires are broken. The molecules are decreased in size while the rubber gains better durability. Additionally, increased thermal conductivity is achieved. The increased thermal conductivity is possible due to use of micro ceramic carbon and auto-catalytic electrons.

Thermal conductivity of a liquid or gas is defined by speed at which heat propagates through matter at a given point. Thermal conductivity is therefore a capacity of a substance to transport heat energy. Increased thermal conductivity results in increase heat propagation owing to which tire heating is decreased thereby decreasing friction and reducing wear.

For example thermal conductivity of air and nitrogen has thermal conductivity at the level of 0,023 ([W/mK] Watt per meter Kelwin) while the rubber is at the level of 0,16, carbon and silicone at the level of 116-165. In contrast the invention utilizes micro carbon tubes having thermal conductivity of 2000-4600.

The additive according to the present invention comprises Rhodopseudomonas bacteria, preferably Rhodopseudomonas palustris that is a gram-negative purple non-sulfur bacteria. This first component constitutes 40% of the additive (in terms of volume eg. 400ml in 1000ml of the additive). Further the additive comprises Lactobacillus, which is a genus of Gram-positive facultative anaerobic or microaerophilic rod-shaped bacteria. This second component constitutes 9% of the additive.

In one embodiment the first component comprises a mixture of Rhodopseudomonas palustris and Rhodobacter spahaeroides while the second component comprises a mixture of laktobacillus buchneri and lactobacillus fermentum.

The additive, according to the present invention, further comprises saccharomyces (a genus in the kingdom of fungi that includes many species of yeast. One example is Saccharomyces cerevisiae) extract wherein this third component constitutes 1% of the additive.

The additive further comprises Streptomyces wherein this fourth component constitutes 3% of the additive. The fourth additive may comprise Streptococcus lactic and Streptococcus thermophilius mixture.

The additive further comprises Aspergillus wherein this fifth component constitutes 3% of the additive.

The additive further comprises mineral micro ceramic wherein this sixth component constitutes 24% of the additive. The mineral micro ceramic may comprise sodium silicates, calcium silicates, carbon silicide, tridymite, cristobalite.

The additive further comprises Mastic, which is a resin obtained from the mastic tree (Pistacia lentiscus), wherein this seventh component constitutes 2% of the additive.

The additive further comprises Dianthus, wherein this eighth component constitutes 2% of the additive.

The additive further comprises Eucalyptus, wherein this ninth component constitutes 3% of the additive.

The additive further comprises Salvia, wherein this tenth component constitutes 2% of the additive.

The additive further comprises Lavandula, wherein this eleventh component constitutes 7% of the additive.

The additive further comprises Thyme, which is any of several species of culinary and medicinal herbs of the genus Thymus, most commonly Thymus vulgaris. This twelfth component constitutes 4% of the additive.

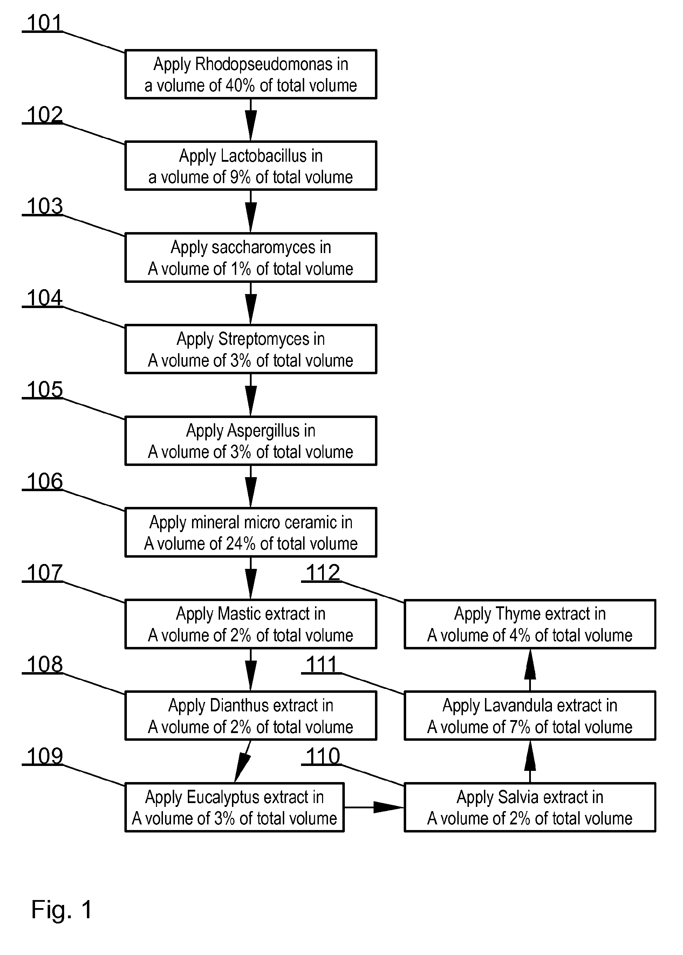

Fig. 1 presents a diagram of the method according to the present invention. This method results in obtaining of an additive agent, which is then to be applied on the inner surface of a tire, forming a chamber with a rim. In order to obtain the additive room temperature and normal atmospheric pressure are applied.

The method starts at step 101 from applying Rhodopseudomonas in a volume of 40% of total volume of the additive. Preferably, a mixture of Rhodopseudomonas palustris and Rhodobacter spahaeroides is provided with 0,4 - 0,5 x 10⁹/1 ml of living cells.

Next, at step 102, there is applied Lactobacillus in a volume of 9% of total volume with 5x10⁵ colony-forming unit (CFU) / ml.

Subsequently, at step 103, there is applied saccharomyces extract in a volume of 1% of total volume, wherein the extract has 0,4% concentration.

Next, at step 104, there is applied Streptomyces in a volume of 3% of the additive. This Streptomyces mixture may comprise Streptococcus lactic and Streptococcus thermophilius mixture with 0,4 - 0,5 x 10⁹/ 1 ml of living cells.

Further, at step 105, there is applied Aspergillus in a volume of 3% of the additive at 80 CFU / ml.

Next, at step 106, there is applied mineral micro ceramic in a volume of 24% of the additive. The mineral micro ceramic is typically an oil.

Subsequently, at step 107, there is applied Mastic extract in a volume of 2% of the additive. For example the extract is a 65 % Mastic extract providing improvement of thermal conductivity parameters, chemical resistance, oxidation resistance, friction coefficient.

Further, at step 108, there is applied Dianthus extract in a volume of 2% of the additive. For example the extract is a 20% Dianthus extract providing antioxidant activity.

Next, at step 109, there is applied Eucalyptus extract in a volume of 3% of the additive. For example the extract is a 50% Eucalyptus extract providing antioxidant activity.

Subsequently, at step 110, there is applied Salvia extract in a volume of 2% of the additive. For example the extract is a 10% Salvia extract providing antioxidant activity.

Further, at step 111, there is applied Lavandula extract in a volume of 7% of the additive. For example the extract is a 50% Lavandula extract providing antioxidant activity.

Next, at step 112, there is applied Thyme extract in a volume of 4% of the additive. For example the extract is a 30% Thyme extract providing antioxidant activity.

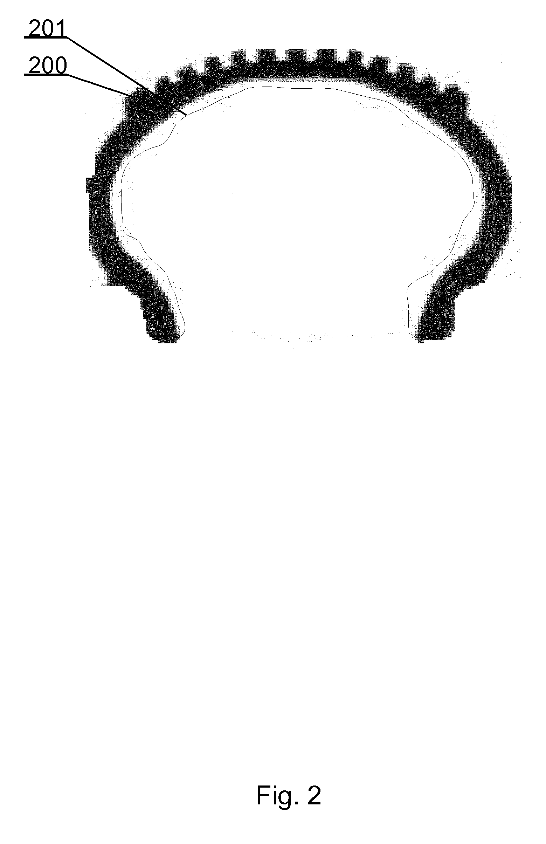

Fig. 2 presents a tire according to the present invention. The tire 200 comprises a layer 201 of the additive according to the present invention. The additive may be applied before the tire is placed on a rim and inflated or in a preferred case after the tire has been inflated. The application of the additive may take place via the gas valve of the wheel or inner tube.

Experiments have shown that for small tires eg. motorcycle, car or bicycle an application of 20ml of the additive per tire is sufficient while for larger tires, eg. truck, bus application of 50ml of the additive per tire is sufficient.

Rolling of the tire, after application of the additive, will allow for spreading of the additive.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. An additive for application on a tire surface for prolonging lifespan of the tire, the additive being **characterized in that** it comprises:
• Rhodopseudomonas in a volume of 40% of total additive volume;
• Lactobacillus in a volume of 9% of total additive volume;
• Saccharomyces extract in a volume of 1 % of total additive volume;
• Streptomyces in a volume of 3%of total additive volume;
• Aspergillus in a volume of 3% of total additive volume;
• Mineral micro ceramic in a volume of 24% of total additive volume;
• Mastic extract in a volume of 2% of total additive volume;
• Dianthus extract in a volume of 2% of total additive volume;
• Eucalyptus extract in a volume of 3% of total additive volume;
• Salvia extract in a volume of 2% of total additive volume;
• Lavandula extract in a volume of 7% of total additive volume;
• Thyme extract in a volume of 4% of total additive volume.

2. Method for prolonging lifespan of a tire, the method being **characterized in that** it comprises a step of applying the additive according to claim 1 on the inner side of a tire.

3. The method according to claim 2 **characterized in that** the application of the additive on the inner side of a tire is effected prior to inflation of the tire.

4. The method according to claim 2 **characterized in that** the application of the additive on the inner side of a tire is effected after inflation of the tire.

5. The method according to claim 1 **characterized in that** 20ml of the additive are applied to a car or bicycle or motorcycle tire.

6. The method according to claim 1 **characterized in that** 50ml of the additive are applied to a truck or bus tire.

7. A tire **characterized in that** it comprises the additive according to claim 1 applied on the inner side.
